# EUROPEAN PATENT SPECIFICATION

(11) **EP 4 144 082 B1**
(45) Date of publication and mention of the grant of the patent: **02.12.2026**
(21) Application number: 21796861.9
(22) Date of filing: 29.04.2021
(51) Int. Cl.: F16M 11/04, F16M 11/10, F16M 11/12, F16M 11/18, F16M 11/20, F16M 13/02, G06F 1/16, G06F 1/18, H04N 5/655

(54) **FLAT PANEL DISPLAY MOUNT WITH SWIVEL FEATURE**
FLACHBILDSCHIRMTRÄGER MIT SCHWENKFUNKTION
SUPPORT D'AFFICHAGE À PANNEAU PLAT DOTÉ D'UN ÉLÉMENT PIVOTANT

(30) Priority: 29.04.2020 US 202063017072 P
(43) Date of publication of application: 08.03.2023
(73) Proprietor: Legrand AV Inc., Minnetonka, MN 55343 (US)
(72) Inventor: KOLZ, Justin, Minnetonka, MN 55343 (US); GRULKOWSKI, Aaron, Minnetonka, MN 55343 (US); GRUNERUD, Wyatt, Minnetonka, MN 55343 (US)
(74) Representative: Patentanwälte Geyer, Fehners & Partner mbB
(86) International application number: PCT/US2021/029978
(87) International publication number: WO 2021/222631

(56) References cited:
- EP-B1- 3 005 687
- WO-A1-2011/099999
- KR-A- 20150 069 103
- KR-B1- 101 949 476
- US-A1- 2011 019 344
- US-A1- 2011 102 984
- US-A1- 2013 082 156
- US-B2- 7 448 584

## Description

### TECHNICAL FIELD

The present application relates to mounts for flat panel electronic display devices, and more specifically, display mounts enabling adjustable positioning of a mounted flat panel electronic display device.

### BACKGROUND

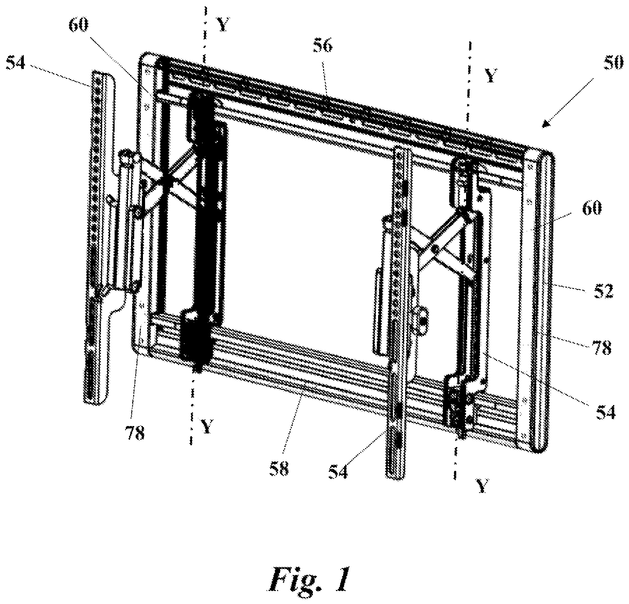

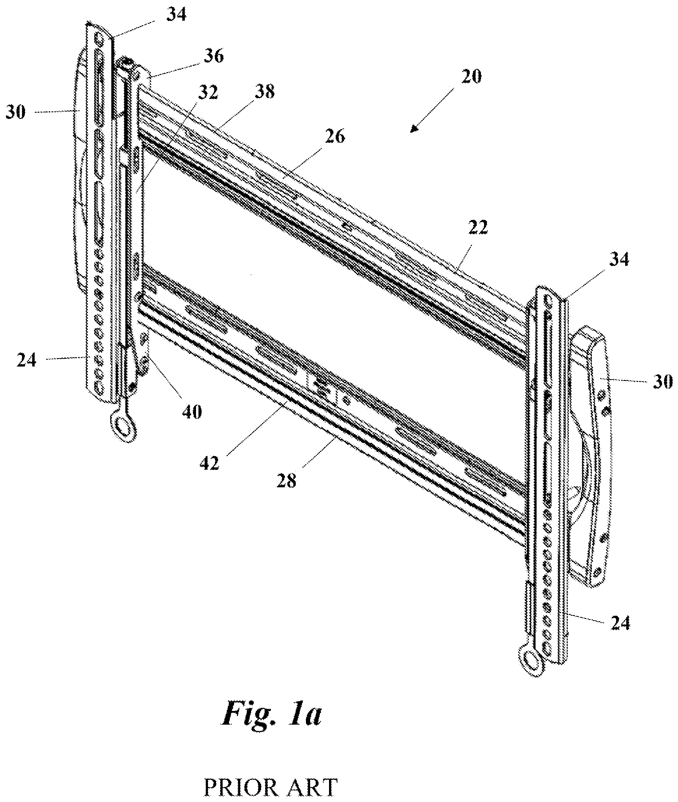

Mounts for attaching a flat panel television or monitor to a vertical surface such as a wall are well-known. For example, US 8456808 B1 discloses a mount for a television or monitor having a wall plate and a pair of display mount brackets. As depicted in prior art FIG. 1a, mount 20 generally includes wall bracket 22 and display mount brackets 24. Wall bracket 22 generally includes upper rail 26, lower rail 28, and side connectors 30. Display mount brackets 24 each generally include engaging bracket 32 and display interface portion 34. Engaging bracket 32 has hook 36 which hooks over top flange 38 of upper rail 26, and lower engaging portion 40 which is received on bottom flange 42 of lower rail 28 to secure the display mount bracket to the wall bracket. Display interface portion 34 is operably coupled to engaging bracket 32 so as to enable a television or monitor attached to display interface portion 34 to be selectively positioned relative to the wall.

WO 2011/099999 A1 discloses an adjustable display mount. EP 3005687 B1 discloses a wall mount system for displays.

A wall mounting monitor bracket having the features of the preamble of claim 1 is known from US 7448584 B2.

While such mounts can securely mount a display device and can offer limited positioning of a display, a drawback is that the display cannot be laterally swiveled relative to the wall so as to enable the plane of the viewing screen to be turned to the side. Such adjustability is desirable if needed to orient the screen toward a portion of the audience, or to minimize glare or direct light on the screen. What is needed is a wall mount for a television or monitor having swivel adjustability.

### SUMMARY

The invention is defined in claim 1. Embodiments of the present invention address the need for a wall mount having swivel adjustability. According to embodiments, the wall mount includes a wall attachment assembly with spaced apart top and bottom rails. A pair of display mount assemblies hang from the wall attachment assembly and attach to a television or other electronic display such as a computer monitor. The display mount brackets include an engaging assembly, a display mount member, a scissors assembly, and a carrier assembly. The engaging assembly has hooks and a swivel guide engaged with the top rail of the wall attachment assembly, and a latch assembly engaged with the bottom rail of the wall attachment assembly. The swivel guide and a contact portion of the latch assembly enable the display mount assemblies to swivel or pivot about a vertical axis relative to the wall attachment assembly. This enables an attached television or monitor to be laterally swiveled relative to the wall.

In an embodiment, a mount for an electronic display device includes a wall attachment assembly including a top rail and a bottom rail spaced apart from the top rail, and a display mount assembly. The display mount assembly includes an engaging assembly having a swivel guide engaged with the top rail of the wail attachment assembly and a latch assembly engaged with the bottom rail of the wall attachment assembly. The swivel guide and the latch assembly enable the display mount assembly to pivot about a vertical axis relative to the wall attachment assembly. The mount further includes a display receiving member adapted to receive the electronic display device and operably coupled to the engaging assembly.

In an embodiment, the mount further includes a scissors assembly operably coupling the display receiving member and the engaging assembly, or a vertical positioning assembly. The engaging assembly can include a pair of hooks engaged with the top rail of the wall attachment assembly, and the latch assembly can have a pair of selectively operable latch hooks.

In an embodiment, the swivel guide can have a curved guide portion. The wall attachment assembly may include a pair of spaced apart side connectors coupling the top rail and the bottom rail.

In embodiments, the display mount assembly is pivotable through a range of about 20 degrees relative to the vertical axis. The display receiving member may be tiltable about a virtual axis disposed forwardly from a display receiving surface of the display receiving member.

In further embodiments, a mount for an electronic display device includes a wall attachment assembly having a top rail and a bottom rail spaced apart from the top rail, the top rail presenting an upturned flange and the bottom rail presenting a downturned flange. The mount further includes a pair of display mount assemblies, each of the display mount assemblies having an engaging assembly including a swivel guide engaged with the upturned flange of the top rail of the wall attachment assembly and a latch assembly engaged with the downturned flange of the bottom rail of the wall attachment assembly. The swivel guide and the latch assembly enable each of the display mount assemblies to pivot about a vertical axis relative to the wall attachment assembly. The mount can also include a display receiving member adapted to receive the electronic display device, a carrier assembly operably coupled to the display receiving member, a scissors assembly operably coupling the engaging assembly and the carrier assembly.

In an embodiment, each display mount assembly includes a vertical positioning assembly, and may include a pair of hooks engaged with the top rail of the wall attachment assembly, a pair of selectively operable latch hooks. The swivel guide may include a curved guide portion. The wall attachment assembly can include a pair of spaced apart side connectors coupling the top rail and the bottom rail.

In embodiments, the display mount assembly is pivotable through a range of about 20 degrees relative to the vertical axis. In other embodiments, the display mount assembly can be pivotable through a range of up to 90 degrees relative to the vertical axis. The display receiving member may be tillable about a virtual axis disposed forwardly from a display receiving surface of the display receiving member.

The above summary is not intended to describe each illustrated embodiment or every implementation of the subject matter hereof. The figures and the detailed description that follow more particularly exemplify various embodiments.

### BRIEF DESCRIPTION OF THE DRAWINGS

The subject matter hereof may be more completely understood in consideration of the following detailed description of various embodiments in connection with the accompanying figures, in which:
FIG. 1 is a front isometric view of a display mount according to an embodiment of the invention;
FIG. 1a is a front isometric view of a prior art display mount;
FIG. 2 is a partial front isometric view of the wall attachment assembly and a display mount assembly of the mount of FIG. 1, depicting the display mount assembly in a tilted position;
FIG. 3 depicts the display mount assembly of FIG. 2 in a non-tilted position;
FIG. 4 is a partial isometric view of the wall attachment assembly and display mount assembly of FIG. 2 viewed from the bottom;
FIG. 5 is a top plan view of the wall attachment assembly and display mount assembly of FIG. 2, depicting a range of swiveling travel;
FIG. 6 is a partial top isometric view of the wall attachment assembly and display mount assembly of FIG. 1;
FIG. 7 is a partial top isometric view of the upper engaging assembly of the display mount assembly of FIG, 2, with the body depicted in phantom for clarity;
FIG. 8 is a partial top isometric view of the display mount assembly of FIG. 7, with the upper swivel guide engaged with the top rail of the wall attachment assembly;
FIG. 9 is a front isometric view of the display mount assembly of FIG. 2 with the display receiving member omitted;
FIG. 10 is a rear isometric view of the display mount assembly of FIG. 2 with the display receiving member omitted;
FIG. 11. is a front isometric view of the body of the display mount assembly of FIGs. 9 and 10;
FIG. 12 is a front isometric view of the lower connection of the scissor arm assembly with the body, with the body depicted in phantom for clarity;
FIG. 13 is a rear isometric view of the latch assembly of the display mount assembly, with the body depicted in phantom for clarity; FIG. 14 is a partial top isometric view of one of the display mount assemblies of the mount of FIG. 1;
FIG. 15 is a front isometric view of the latch assembly engaged with the bottom rail and in a swiveled position;
FIG. 16 is a rear isometric view of the lower scissor arm assembly connection between the carrier and the scissor arm, with the carrier depicted in phantom for clarity;
FIG. 17 is a partial front isometric view of the wall attachment assembly of the mount of FIG. 1;
FIG. 18 is a side elevation view of one of the display interface members of the mount of FIG. 1; and
FIG. 19 is a top plan view of the mount of FIG. 1 attached to a wall and with an attached television swiveled to the side.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications and alternatives falling within the scope of the subject matter as defined by the claims.

### DETAILED DESCRIPTION

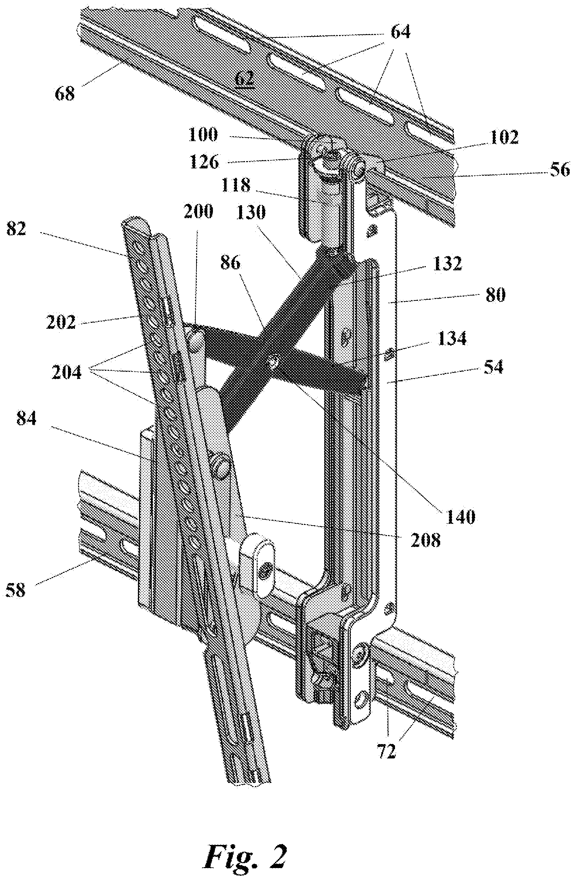

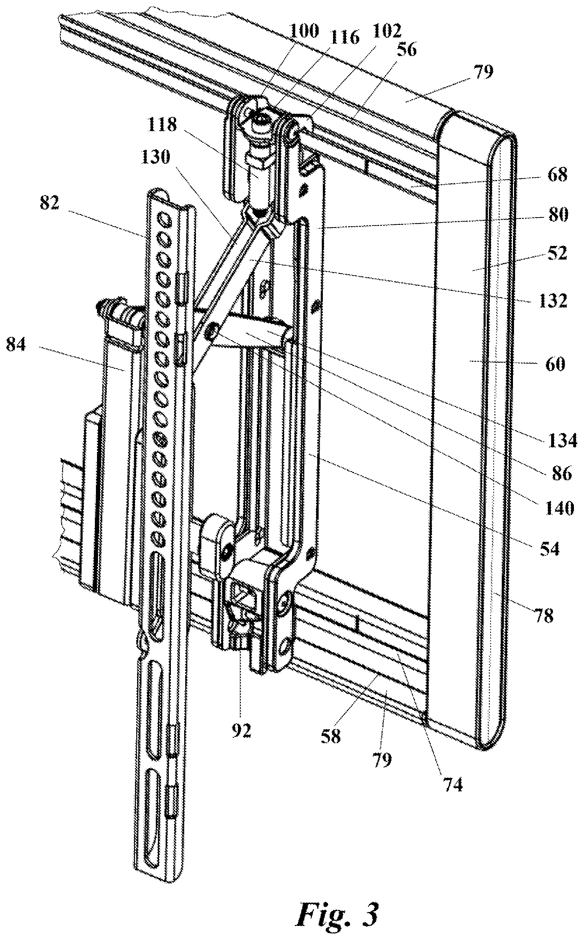

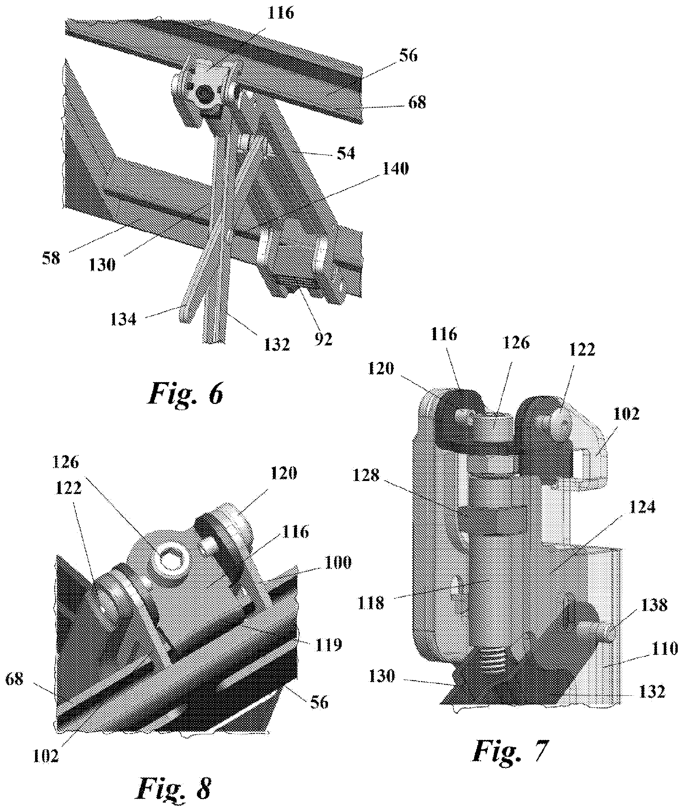

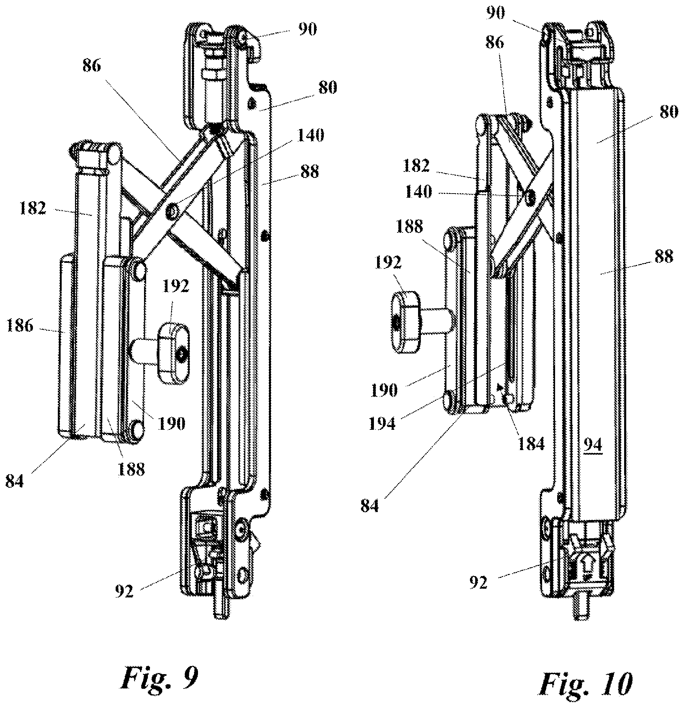

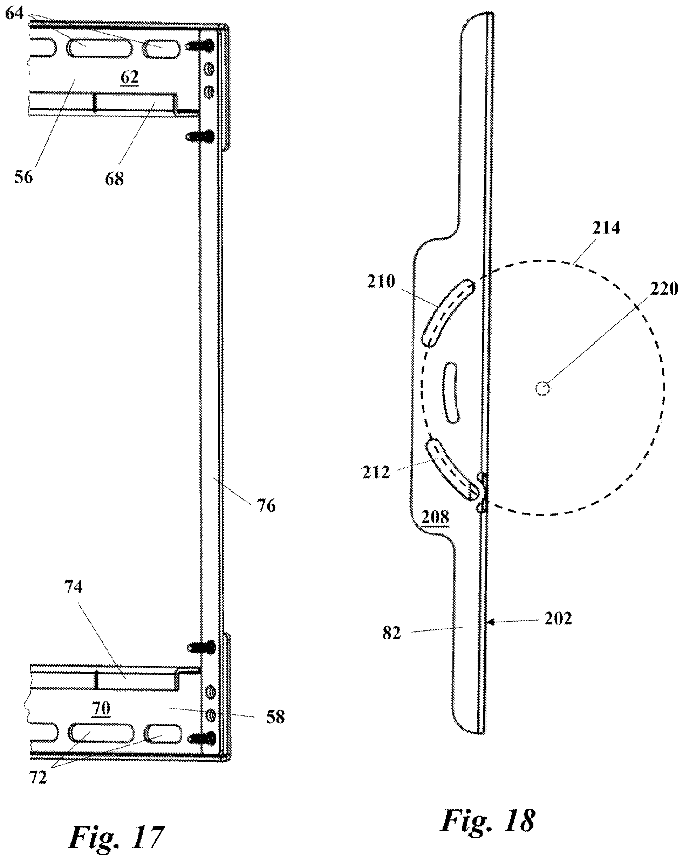

A mount 50 according to an embodiment of the invention is depicted in FIGs. 1, and 2-19. Mount 50 generally includes wall attachment assembly 52 and display mount assemblies 54. As depicted, wall attachment assembly 52 generally includes top rail 56, bottom rail 58, and side connectors 60. Top rail 56 has back plate 62 defining apertures 64 for receiving fasteners (not depicted) to attach wall attachment assembly 52 to wall 66, and projecting upturned flange 68. Bottom rail 58 has back plate 70 defining apertures 72 for receiving fasteners (not depicted) to attach wall attachment assembly 52 to wall 66, and projecting downturned turned flange 74. Side connectors 60 extend between, and couple, top rail 56 and bottom rail 58 at each lateral end, and generally include connector bar 76, and decorative cover 78. Decorative covers 79 can be similarly fitted over top rail 56 and bottom rail 58.

Each display mount assembly 54 generally includes engaging assembly 80, display receiving member 82, carrier assembly 84, and scissors assembly 86. Engaging assembly 80 generally includes body 88, upper engaging assembly 90 and latch assembly 92. Body 88 includes back plane and forwardly projecting flanges 96, 98. Hooks 100, 102, are defined at upper ends 104, 106, of flanges 96, 98, respectively. Flanges 96, 98, further define vertical slots 108, 110, and inwardly turned flanges 112, 114, respectively.

Upper engaging assembly 90 is fitted between hooks 100, 102, and generally includes upper swivel guide 116 and vertical positioning assembly 118. Upper swivel guide 116 has curved guide portion 119, and is riveted to body 88 with rivets 120, 122.

Vertical positioning assembly 118 generally includes body 124 and positioning screw 126. Body 124 hangs from nut 128 and vertically slides relative to body 88 as positioning screw 126 is turned - vertically upward as positioning screw 126 is turned clockwise, and vertically downward as positioning screw 126 is turned counter-clockwise as viewed from above.

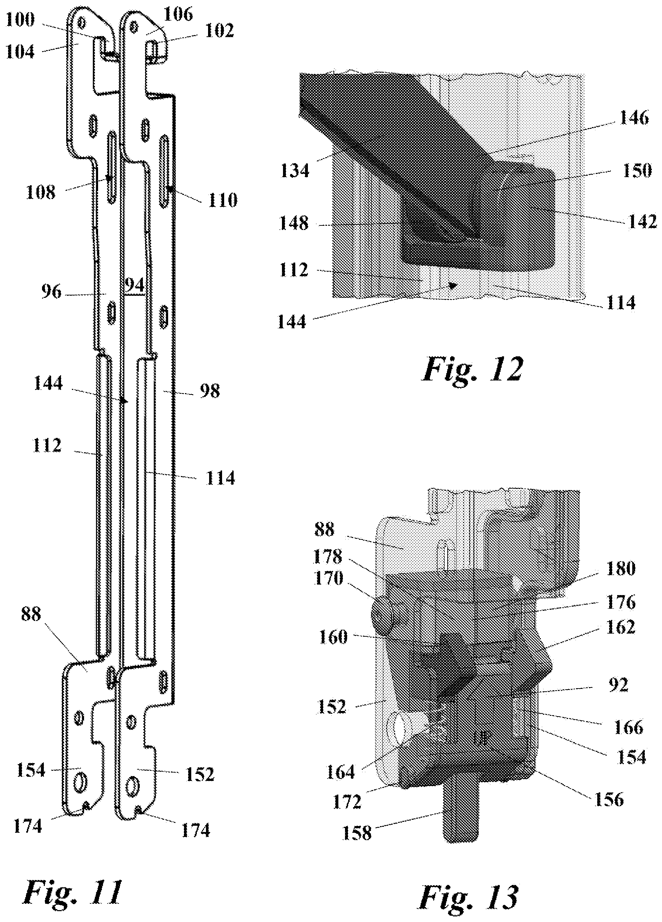

Scissors assembly 86 generally includes first arms 130, 132, and second arm 134, First arms 130, 132, are pivotally attached to body 124 with pivot pins 138, which are in turn slidably received in slots 108, 110. The vertical position of pins 138, can be vertically shifted relative to body 88 as body 124 is vertically translated with positioning screw 126. First arms 130, 132, and second arm 134 are pivotally attached together with pivot 140. Slide block 142 is slidably received in channel 144 formed by body 88 and is horizontally retained by inwardly turned flanges 112, 114 as depicted in FIG. 12. Bottom end 146 of second arm 134 is pivotally attached to slide block 142. Bearings 148, 150, roll in channel 144 as slide block 142 slides vertically in channel 144.

As depicted in FIG. 13, latch assembly 92 is received between lower flanges 152, 154, of body 88 and generally includes latch body 156, latch control 158, latch hooks 160, 162, biasing springs 164, 166, and contact member 168. Latch body 156 is secured in place with rivets 170 and locating tabs 172, which fit into locating notches 174 in body 88. Biasing springs 164, 166, bias latch hooks 160, 162, upward. Latch control 158 is movably coupled to latch body 156, and is operable to shift latch hooks 160, 162, downward against the bias of biasing springs 164, 166. Contact member 168 defines ridge 176 with angled flats 178, 180, on either side.

Carrier assembly 84 generally includes earner body 182, which defines channel 184, spacers 186, 188, clamp 190, and friction control 192. Carrier body 182 further defines vertical slots 194. Pivot pin 196 is slidably received in slots 194, and extends through bearings 198 and first arms 130, 132, so that first arms 130, 132, are pivotally coupled with carrier body 182, and pivot pin is vertically slidable in channel 184. Second arm 134 is pivotally attached to carrier body 182 with pivot 200.

Display receiving member 82 presents forwardly facing display mounting surface 202, which defines apertures 204 for receiving fasteners (not depicted) for attaching television or display 206. Flange 208 extends rearwardly, and defines slots 210, 212. Slots 210, 212, may be positioned along the circumference of a circle 214. Flange 208 is clamped between spacer 188 and clamp 190, with pins 216, 218, extending through slots 210, 212, respectively. Pins 216, 218 slide in slots 210, 212, enabling display receiving member 82 to tilt about a virtual horizontal axis 220 positioned at the center of circle 214 and in front of display mounting surface 202. This aspect is described in US 8490934 B1 and US 8235342 B1. Display receiving member 82, and an attached television or display 206, can be tilted relative to wall 66 by grasping the top or bottom of the television or display 206 and pushing or pulling until the television or display 206 is in a desired tilt position. Friction control 192 can he tightened or loosened to adjust the friction holding display receiving member 82 in position.

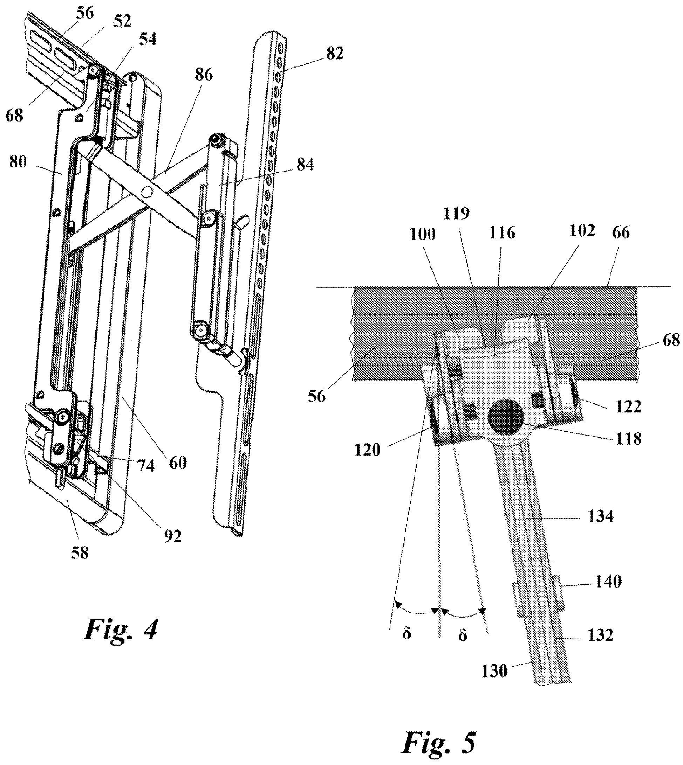

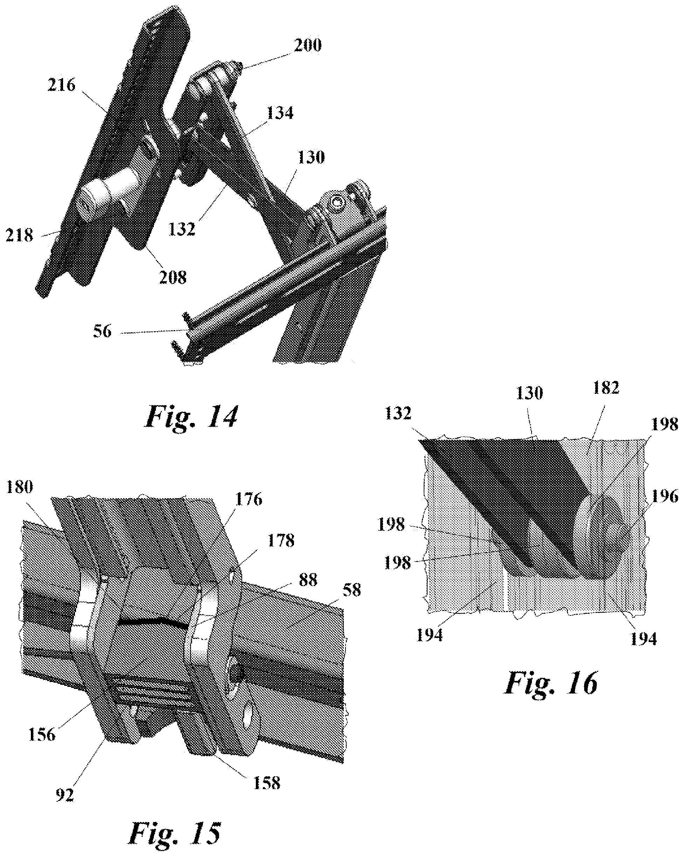

In use, wall attachment assembly 52 is mounted to wall 66, and television or display 206 is attached to display receiving members 82, Hooks 100, 102, of each display mount assembly 54 are hooked over upturned flange 68, with curved guide portion 119 behind upturned flange 68 as depicted in FIG. 5. Latch assembly 92 is advanced toward lower rail 58. Latch hooks 160, 162, bear against downturned flange 74 and are pressed downward against the bias of biasing springs 164, 166. Once clear of downturned flange 74, biasing springs 164, 166, return latch hooks 160, 162, upward, latching display mount assemblies 54 in place on wall attachment assembly 52. Ridge 176 of contact member 168 bears against downturned flange 74 as depicted in FIG. 15. Television or display 206 can be pulled away from or pushed toward wall 66 through the action of scissors assemblies 86. The vertical position of each scissors assembly 86, and thereby each side of television or display 206, can be separately adjusted by turning positioning screws 126 in order to level television or display 206. Television or display 206 can be tilted to a desired position about horizontal axis 220 by grasping the top or bottom of the television or display 206 and pushing or pulling.

Finally, television or display 206 can be swiveled relative to wall 66 as depicted in FIGs. 5 and 19. Curved guide portion 119 can roll on upturned flange 68 and contact member 168 can rock on ridge 176 against downturned flange 74, enabling each engaging assembly 80 to rotate about a vertical axis Y-Y relative to wall attachment assembly 52 and wall 66. Each display mount assembly 54 can thereby be swiveled (pivoted) to each side through an angle δ relative to perpendicular with wall 66 as depicted in FIG. 5. In some embodiments, angle δ can be about 10 degrees, for a total range of about 20 degrees of pivoting relative to the vertical axis. In other embodiments, especially for smaller televisions, angle δ can be up to about 45 degrees, for a total range of about 90 degrees of pivoting relative to the vertical axis.

Television or display 206 can be dismounted from wall 66 by pressing upward on latch controls 158 against the bias of biasing springs 164, 166, causing latch hooks 160, 162, to move clear of down turned flange 74. The bottom ends of display mount assemblies 54 can be pulled away from bottom rail 58. Hooks 100, 102, can then be lifted clear of upturned flange 68 to dismount television or display 206.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claims.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

## Claims

1. A mount (50) for an electronic display device comprising:
a wall attachment assembly (52) including a top rail (56) and a bottom rail (58) spaced apart from the top rail (56); and
a display mount assembly (54) comprising
an engaging assembly (80) including a swivel guide (116) engaged with the top rail (56) of the wall attachment assembly (52) and a latch assembly (92) engaged with the bottom rail (58) of the wall attachment assembly (52); and
a display receiving member (82) adapted to receive the electronic display device and operably coupled to the engaging assembly (80),
the top rail (56) presenting an upturned flange (68) and the bottom rail (58) presenting a downturned flange (74);
a pair of the display mount assemblies (54), wherein in each of the display mount assemblies (54) the swivel guide (116) is engaged with the upturned flange (68) of the top rail (56) and the latch assembly (92) is engaged with the downturned flange (74) of the bottom rail (58);
a carrier assembly (84) operably coupled to the display receiving member (82); and
a scissors assembly (86) operably coupling the engaging assembly (80) and the carrier assembly (84),
**characterized in, that**
the swivel guide (116) and the latch assembly (92) enable the display mount assembly (54) to pivot about a vertical axis relative to the wall attachment.

2. The mount of claim 1, further comprising the scissors assembly (86) operably coupling the display receiving member (82) and engaging assembly (80).

3. The mount of any of the preceding claims, wherein each display mount assembly (54) includes a vertical positioning assembly (118).

4. The mount of any of the preceding claims, wherein the engaging assembly (80) includes a pair of hooks (100, 102) engaged with the top rail (56) of the wall attachment assembly (52).

5. The mount of claim any of the preceding claims, wherein the latch assembly (92) has a pair of selectively operable latch hooks (160, 162).

6. The mount of any of the preceding claims, wherein the swivel guide (116) has a curved guide portion (119).

7. The mount of any of the preceding claims, wherein the wall attachment assembly (52) includes a pair of spaced apart side connectors (60) coupling the top rail (56) and the bottom rail (58).

8. The mount of any of the preceding claims, wherein each display mount assembly (54) is pivotable through a range of about 20 degrees relative to the vertical axis.

9. The mount of any of the preceding claims, wherein the display receiving member (82) is tiltable about a virtual axis disposed forwardly from a display receiving surface of the display receiving member (82).

## Patentansprüche

1. Eine Halterung (50) für ein elektronisches Anzeigegerät, umfassend:
eine Wandbefestigungsbaugruppe (52) mit einer oberen Schiene (56) und einer unteren Schiene (58), die von der oberen Schiene (56) beabstandet ist; und
eine Bildschirmträgerbaugruppe (54) aufweisen,
eine Eingriffsbaugruppe (80) mit einer Schwenkführung (116) umfasst, die mit der oberen Schiene (56) der Wandbefestigungsbaugruppe (52) in Eingriff steht, und
einer Verriegelungsbaugruppe (92), die mit der unteren Schiene (58) der Wandbefestigungsbaugruppe (52) in Eingriff steht; sowie
ein Bildschirmaufnahmeelement (82), das zur Aufnahme des elektronischen Anzeigegeräts ausgelegt und operativ mit der Eingriffseinheit (80) verbunden ist,
wobei die obere Schiene (56) einen nach oben gerichteten Flansch (68) und die untere Schiene (58) einen nach unten gerichteten Flansch (74) aufweist;
ein Paar von Bildschirmträgerbaugruppen (54), wobei in jeder der Bildschirmträgerbaugruppen (54) die Schwenkführung (116) mit dem nach oben gerichteten Flansch (68) der oberen Schiene (56) in Eingriff steht und die Verriegelungsbaugruppe (92) mit dem nach unten gerichteten Flansch (74) der unteren Schiene (58) in Eingriff steht;
eine Tragbaugruppe (84), die mit dem Bildschirmaufnahmeelement (82) in Wirkverbindung steht; und
eine Scherenbaugruppe (86), die die Eingriffsbaugruppe (80) und die Tragbaugruppe (84) in Wirkverbindung miteinander bringt,
**dadurch gekennzeichnet, dass**
die Schwenkführung (116) und die Verriegelungsbaugruppe (92) es der Bildschirmträgerbaugruppe (54) ermöglichen, sich relativ zur Wandbefestigung um eine vertikale Achse zu schwenken.

2. Halterung nach Anspruch 1, ferner umfassend die Scherenbaugruppe (86), die das Bildschirmaufnahmeelement (82) und die Eingriffsbaugruppe (80) in Wirkverbindung bringt.

3. Halterung nach einem der vorstehenden Ansprüche, wobei jede Bildschirmträgerbaugruppe (54) eine vertikale Positionierungsbaugruppe (118) umfasst.

4. Halterung nach einem der vorstehenden Ansprüche, wobei die Eingriffsbaugruppe (80) ein Paar Haken (100, 102) umfasst, die mit der oberen Schiene (56) der Wandbefestigungsbaugruppe (52) in Eingriff stehen.

5. Halterung nach einem der vorstehenden Ansprüche, wobei die Verriegelungsbaugruppe (92) ein Paar wahlweise betätigbarer Verriegelungshaken (160, 162) aufweist.

6. Halterung nach einem der vorstehenden Ansprüche, wobei die Schwenkführung (116) einen gekrümmten Führungsabschnitt (119) aufweist.

7. Halterung nach einem der vorstehenden Ansprüche, wobei die Wandbefestigungsbaugruppe (52) ein Paar voneinander beabstandeter Seitenverbinder (60) umfasst, die die obere Schiene (56) und die untere Schiene (58) miteinander verbinden.

8. Halterung nach einem der vorstehenden Ansprüche, wobei jede Bildschirmträgerbaugruppe (54) relativ zur Vertikalachse um einen Bereich von etwa 20 Grad schwenkbar ist.

9. Halterung nach einem der vorstehenden Ansprüche, wobei das Bildschirmaufnahmeelement (82) um eine virtuelle Achse neigbar ist, die vor einer Bildschirmaufnahmefläche des Bildschirmaufnahmeelements (82) angeordnet ist.

## Revendications

1. Support (50) pour un dispositif d'affichage électronique, comprenant:
un ensemble de fixation murale (52) comprenant un rail supérieur (56) et un rail inférieur (58) espacé du rail supérieur (56); et
un ensemble de fixation d'écran (54) comprenant
un ensemble d'engagement (80) comportant un guide pivotant (116) engagé avec le rail supérieur (56) de l'ensemble de fixation murale (52) et
un ensemble de verrouillage (92) engagé avec le rail inférieur (58) de l'ensemble de fixation murale (52); et
un élément de réception d'écran (82) adapté pour recevoir le dispositif d'affichage électronique et couplé de manière fonctionnelle à l'ensemble d'engagement (80),
le rail supérieur (56) présentant une bride relevée (68) et le rail inférieur (58) présentant une bride rabattue (74);
une paire d'ensembles de fixation d'écran (54), dans lesquels, dans chacun des ensembles de fixation d'écran (54), le guide pivotant (116) est en prise avec la bride relevée (68) du rail supérieur (56) et l'ensemble de verrouillage (92) est en prise avec la bride rabattue (74) du rail inférieur (58);
un ensemble support (84) couplé de manière fonctionnelle à l'élément de réception d'écran (82); et
un ensemble en ciseaux (86) couplant de manière fonctionnelle l'ensemble d'engagement (80) et l'ensemble de support (84),
**caractérisé en ce que**
le guide pivotant (116) et l'ensemble de verrouillage (92) permettent à l'ensemble de fixation d'écran (54) de pivoter autour d'un axe vertical par rapport à la fixation murale.

2. Support selon la revendication 1, comprenant en outre l'ensemble en ciseaux (86) reliant de manière fonctionnelle l'élément de réception d'écran (82) et l'ensemble d'engagement (80).

3. Support selon l'une quelconque des revendications précédentes, dans lequel chaque ensemble de fixation d'écran (54) comprend un ensemble de positionnement vertical (118).

4. Support selon l'une quelconque des revendications précédentes, dans lequel l'ensemble d'engagement (80) comprend une paire de crochets (100, 102) engagés avec le rail supérieur (56) de l'ensemble de fixation murale (52).

5. Support selon l'une quelconque des revendications précédentes, dans lequel l'ensemble de verrouillage (92) comporte une paire de crochets de verrouillage (160, 162) pouvant être actionnés de manière sélective.

6. Support selon l'une quelconque des revendications précédentes, dans lequel le guide pivotant (116) comporte une partie de guidage courbe (119).

7. Support selon l'une quelconque des revendications précédentes, dans lequel l'ensemble de fixation murale (52) comprend une paire de connecteurs latéraux espacés (60) reliant le rail supérieur (56) et le rail inférieur (58).

8. Support selon l'une quelconque des revendications précédentes, dans lequel chaque ensemble de support d'écran (54) peut pivoter sur une amplitude d'environ 20 degrés par rapport à l'axe vertical.

9. Support selon l'une quelconque des revendications précédentes, dans lequel l'élément de réception d'écran (82) peut s'incliner autour d'un axe virtuel situé en avant d'une surface de réception d'écran de l'élément de réception d'écran (82).
